# EUROPÄISCHE PATENTSCHRIFT

(11) **EP 1 076 761 B1**
(45) Veröffentlichungstag und Bekanntmachung des Hinweises auf die Patenterteilung: **10.09.2003**
(21) Anmeldenummer: 99929050.5
(22) Anmeldetag: 29.04.1999
(51) Int. Cl.: F01K 23/10, F22B 37/22, F02C 7/18

(54) **GAS- UND DAMPFTURBINENANLAGE**
GAS AND STEAM TURBINE INSTALLATION
INSTALLATIONS A TURBINE A GAZ ET A TURBINE A VAPEUR

(30) Priorität: 06.05.1998 DE 19820196
(43) Veröffentlichungstag der Anmeldung: 21.02.2001
(73) Patentinhaber: SIEMENS AKTIENGESELLSCHAFT, 80333 München (DE)
(72) Erfinder: GEBKE, Klaus, D-63561 Gelnhausen (DE); GREIS, Thomas, D-64285 Darmstadt (DE); THIEL, Hans-Joachim, D-91056 Erlangen (DE)
(86) Internationale Anmeldenummer: DE9901264
(87) Internationale Veröffentlichungsnummer: WO99057421

(56) Entgegenhaltungen:
- DE-A- 4 446 862
- PATENT ABSTRACTS OF JAPAN vol. 005, no. 116 (M-080), 25. Juli 1981 (1981-07-25) & JP 56 056594 A (MITSUBISHI HEAVY IND LTD), 18. Mai 1981 (1981-05-18)

## Beschreibung

Die Erfindung bezieht sich auf eine Gas- und Dampfturbinenanlage mit einem einer Gasturbine rauchgasseitig nachgeschalteten Abhitzedampferzeuger, dessen Heizflächen in den Wasser-Dampf-Kreislauf einer Dampfturbine geschaltet sind.

Bei einer Gas- und Dampfturbinenanlage wird die im entspannten Arbeitsmittel oder Rauchgas der Gasturbine enthaltene Wärme zur Erzeugung von Dampf für die Dampfturbine genutzt. Die Wärmeübertragung erfolgt in einem der Gasturbine rauchgasseitig nachgeschalteten Abhitzedampferzeuger, in dem Heizflächen in Form von Rohren oder Rohrbündeln angeordnet sind. Diese wiederum sind in den Wasser-Dampf-Kreislauf der Dampfturbine geschaltet. Der Wasser-Dampf-Kreislauf umfaßt üblicherweise mehrere, beispielsweise zwei, Druckstufen, wobei jede Druckstufe eine Vorwärm- und eine Verdampferheizfläche aufweist.

Für die Gasturbine einer derartigen Gasturbinenanlage ist üblicherweise eine Schaufelkühlung erforderlich. Dies ist insbesondere dann der Fall, wenn aufgrund der Eintrittstemperaturen des Arbeitsmediums in die Gasturbine die Schaufeln einer besonders starken Wärmebelastung ausgesetzt sind.

Für die Schaufelkühlung kann Luft hinter dem Luftverdichter der Gasturbinenanlage entnommen werden. Durch die Verdichtung der Luft im Luftverdichter wird diese stark erwärmt. Daher kann eine Abkühlung der entnommenen Verdichterluft erforderlich sein, um eine ausreichende Kühlung der Schaufeln der Gasturbine sicherzustellen. Für diese Kühlung kann ein Wärmetauscher vorgesehen sein, der mit der verdichteten Luft als Heizmedium beaufschlagt ist. Sekundärseitig kann der Wärmetauscher als Verdampfer ausgebildet sein, der zur Rückgewinnung der in der verdichteten Luft enthaltenen Wärme an den Wasser-Dampf-Kreislauf der Dampfturbine angeschlossen ist.

Beim Transport des Wasser-Dampf-Gemisches vom Verdampfer zum Abhitzedampferzeuger sollte jedoch darauf geachtet werden, daß keine Separation der beiden Phasen auftritt. Bei einer Phasenseparation können nämlich Rückströmungen des Kondensats auftreten. Diese können Kondensationsschläge in den Leitungen verursachen und somit zu unerwünschten Beschädigungen der Komponenten führen.

In der Druckschrift DE-A-4446862 ist eine Gas- und Dampfturbinenanlage mit einem der Gasturbine rauchgasseitig nachgeschalteten Abhitzedampferzeuger offenbart, dessen Heizflächen in den Wasser-Dampfkreislauf einer Dampfturbine geschaltet sind. Dabei wird der Gasturbine zur Schaufelkühlung zuzuführende Kühlluft als Heizmedium über einen Verdampfer geführt, der sekundärseitig an den Wasser-Dampf-Kreislauf angeschlossen ist und dabei ausgangsseitig in den Dampfsammelraum mündet.

Aus der Schrift JP-A-56056594 sind Trennwände eines Sammelraums bekannt.

Der Erfindung liegt daher die Aufgabe zugrunde, eine Gas- und Dampfturbinenanlage der oben genannten Art anzugeben, bei der mit besonders geringem technischen Aufwand eine Separation der beiden Phasen beim Transport des Wasser-Dampf-Gemisches vom Verdampfer zum Abhitzedampferzeuger besonders zuverlässig vermieden ist.

Diese Aufgabe wird für eine Gas- und Dampfturbinenanlage der oben genannten Art erfindungsgemäß gelöst, indem der Gasturbine zur Schaufelkühlung zuzuführende Luft als Heizmedium über einen Verdampfer geführt ist, der sekundärseitig an den Wasser-Dampf-Kreislauf angeschlossen ist und dabei ausgangsseitig in einen Dampfsammelraum mündet, der über eine Anzahl von dampfseitig parallel geschalteten Zuleitungsrohren mit einer Wasser-Dampf-Trommel verbunden ist, wobei der Dampfsammelraum eine Anzahl von miteinander verbundenen Unterräumen aufweist, von denen jeder jeweils einem Zuleitungsrohr zugeordnet ist. Vorteilhafterweise sind im Dampfsammelraum zur Bildung der miteinander verbundenen Unterräume eine Anzahl von Schottblechen angeordnet. In dieser Ausgestaltung ist eine besonders gleichmäßige Zuleitung des sich im Dampfsammelraum befindlichen Wasser-Dampf-Gemisches zu den einzelnen Zuleitungsrohren gewährleistet.

Die Erfindung geht von der Überlegung aus, daß eine Separation der beiden Phasen dann eintritt, wenn in Abhängigkeit vom Druck eine bestimmte Strömungsgeschwindigkeit des Wasser-Dampf-Gemisches unterschritten wird. Die Grenzgeschwindigkeit des Zwei-Phasen-Gemisches, unterhalb derer eine Phasenseparation auftreten kann, ist dabei abhängig vom Innendurchmesser des durchströmten Rohres. Ein vergleichsweise kleiner Innendurchmesser ermöglicht dabei zwar eine vergleichsweise hohe Strömungsgeschwindigkeit, ohne daß eine Phasenseparation auftritt, begrenzt aber andererseits auch den Durchsatz durch dieses Zuleitungsrohr. Um beide Anforderungen zu erfüllen, ist eine Anzahl von Zuleitungsrohren mit einem vergleichsweise kleinen Innendurchmesser parallel geschaltet. Dabei sollte eine gleichmäßige Beaufschlagung der Zuleitungsrohre gewährleistet sein. Eine gleichmäßige Beaufschlagung der Zuleitungsrohre mit Dampf ist dann gewährleistet, wenn jedem Zuleitungsrohr annähernd die gleiche Menge Dampf zugeordnet wird und annähernd derselbe Dampfdruck im Einmündungsbereich des Dampfsammelraums in die Zuleitungsrohre herrscht. Hierzu weist der Dampfsammelraum eine Anzahl von miteinander verbundenen Unterräumen auf, denen jeweils ein Zuleitungsrohr zugeordnet ist.

Wie sich nach umfangreichen Versuchen herausgestellt hat, erweist sich eine Strömungsgeschwindigkeit des Wasser-Dampf-Gemisches von 35 m/s als eine besonders günstige Grenze, die nicht unterschritten werden sollte. Oberhalb dieses Wertes stehen nämlich der Druckverlust, die Gefahr von Erosion und Korrosion und eine zuverlässige Verhinderung der Phasenseparation in einem besonders ausgewogenen Verhältnis zueinander. Deswegen sind vorteilhafterweise die Zuleitungsrohre hinsichtlich ihrer Anzahl und ihres Innendurchmessers dᵢ derart ausgelegt, daß bei allen Betriebszuständen der Anlage das in ihnen strömende Wasser-Dampf-Gemisch eine Strömungsgeschwindigkeit von 35 m/s nicht unterschreitet.

Die Wasser-Dampf-Trommel ist zweckmäßigerweise zur Bildung eines Umlaufs eingangs- und ausgangsseitig mit einer Verdampferheizfläche verbunden, die im Abhitzedampferzeuger angeordnet ist.

Die mit der Erfindung erzielten Vorteile bestehen insbesondere darin, daß durch die Parallelschaltung der Zuleitungsrohre, bei der jedem Zuleitungsrohr jeweils ein Unterraum des Dampfsammelraums zugeordnet ist, besonders zuverlässig eine Separation der beiden Phasen des Wasser-Dampf-Gemischs beim Transport vom Verdampfer zum Abhitzedampferzeuger verhindert ist. Dadurch sind Beschädigungen der entsprechenden Komponenten sicher vermieden, so daß die Gas- und Dampfturbinenanlage eine besonders lange Lebensdauer aufweist. Zudem ist in besonders günstiger Weise eine Rückführung der in der zur Schaufelkühlung vorgesehenen Luft enthaltenen Wärmeenergie in den Dampferzeugungsprozeß der Anlage gewährleistet.

Ein Ausführungsbeispiel wird anhand einer Zeichnung näher erläutert. Darin zeigen:
- FIG 1: schematisch eine Gas- und Dampfturbinenanlage und
- FIG 2: schematisch den Dampfsammelraum gemäß Figur 1.

Einander entsprechende Teile sind in beiden Figuren mit den gleichen Bezugszeichen versehen.

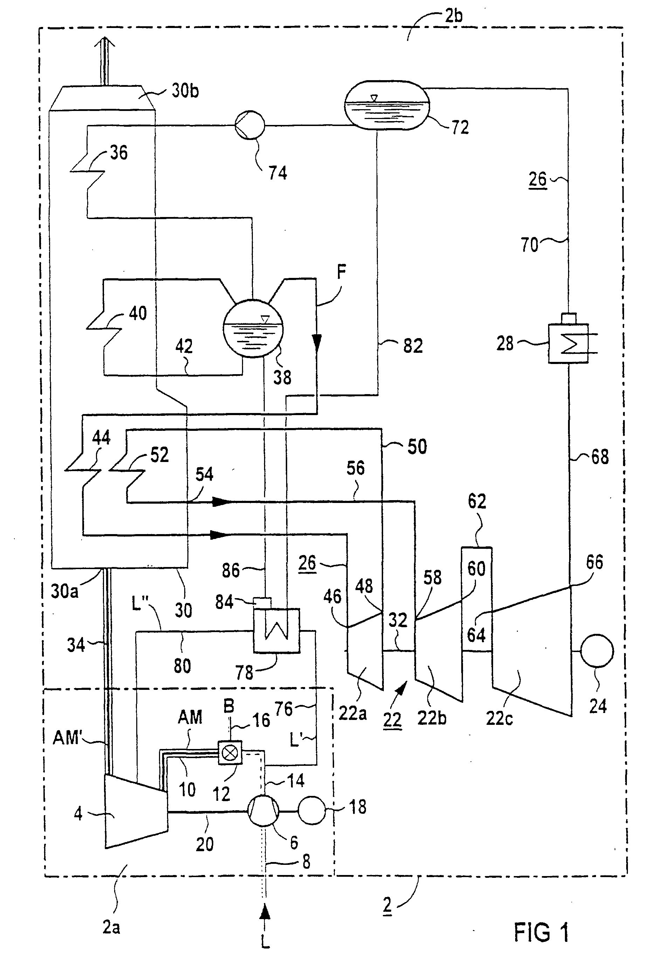

Die in Figur 1 schematisch dargestellte Gas- und Dampfturbinenanlage 2 umfaßt eine Gasturbinenanlage 2a und eine Dampfturbinenanlage 2b. Die Gasturbinenanlage 2a umfaßt eine Gasturbine 4 mit angekoppeltem Luftverdichter 6. Der Luftverdichter 6 ist eingangsseitig an eine für Luft L vorgesehene Ansaugluftleitung 8 angeschlossen. Der Gasturbine 4 ist über eine für Arbeitsmedium AM vorgesehene Zufuhrleitung 10 eine Brennkammer 12 vorgeschaltet, die an eine Frischluftleitung 14 des Luftverdichters 6 angeschlossen ist. In die Brennkammer 12 der Gasturbine 4 mündet eine für Brennstoff B vorgesehene Brennstoffleitung 16. Die Gasturbine 4 und der Luftverdichter 6 sowie ein Generator 18 sitzen auf einer gemeinsamen Welle 20.

Die Dampfturbinenanlage 2b umfaßt eine Dampfturbine 22 mit angekoppeltem Generator 24 und in einem Wasser-Dampf-Kreislauf 26 einen der Dampfturbine 22 nachgeschalteten Kondensator 28 sowie einen Abhitzedampferzeuger 30. Die Dampfturbine 22 besteht aus einer ersten Druckstufe oder einem Hochdruckteil 22a und einer zweiten Druckstufe oder einem Mitteldruckteil 22b sowie einer dritten Druckstufe oder einem Niederdruckteil 22c, die über eine gemeinsame Welle 32 den Generator 24 antreiben.

Zum Zuführen von in der Gasturbine 4 entspanntem Arbeitsmittel AM' oder Rauchgas in den Abhitzedampferzeuger 30 ist eine Abgasleitung 34 an einen Eingang 30a des Abhitzedampferzeugers 30 angeschlossen. Das entspannte Arbeitsmittel AM' aus der Gasturbine 4 verläßt den Abhitzedampferzeuger 30 über dessen Ausgang 30b in Richtung auf einen nicht näher dargestellten Kamin.

Der Abhitzedampferzeuger 30 umfaßt in einer ersten Druckstufe oder Hochdruckstufe des Wasser-Dampf-Kreislaufs 26 einen Hochdruckvorwärmer oder Economizer 36, der an elne Wasser-Dampf-Trommel 38 angeschlossen ist. Die Wasser-Dampf-Trommel 38 ist mit einer im Abhitzedampferzeuger 30 angeordneten Verdampferheizfläche 40 zur Bildung eines Wasser-Dampf-Umlaufs 42 verbunden. Zum Abführen von Frischdampf F ist die Hochdrucktrommel 38 an einen im Abhitzedampferzeuger 30 angeordneten Hochdrucküberhitzer 44 angeschlossen, der ausgangsseitig mit dem Dampfeinlaß 46 des Hochdruckteils 22a der Dampfturbine 22 verbunden ist.

Der Dampfauslaß 48 des Hochdruckteils 22a der Dampfturbine 22 ist über eine Dampfleitung 50 ("kalte ZÜ") mit einem Zwischenüberhitzer 52 verbunden, dessen Ausgang 54 über eine Dampfleitung 56 an den Dampfeinlaß 58 des Mitteldruckteils 22b der Dampfturbine 22 angeschlossen ist. Dessen Dampfauslaß 60 ist über eine Überströmleitung 62 mit dem Dampfeinlaß 64 des Niederdruckteils 22c der Dampfturbine 22 verbunden. Der Dampfauslaß 66 des Niederdruckteils 22c der Dampfturbine 22 ist über eine Dampfleitung 68 an den Kondensator 28 angeschlossen. Dieser ist über eine Speisewasserleitung 70, in die ein Speisewasserbehälter 72 und eine Speisewasserpumpe 74 geschaltet sind, mit dem Economizer 36 so verbunden, daß ein geschlossener Wasser-Dampf-Kreislauf 26 entsteht.

In dem Ausführungsbeispiel gemäß Figur 1 ist somit lediglich die erste Druckstufe des Wasser-Dampf-Kreislaufs 26 detailliert dargestellt. Im Abhitzedampferzeuger 30 sind jedoch noch weitere, nicht näher dargestellte Heizflächen angeordnet, die jeweils einer Mittel- oder einer Niederdruckstufe des Wasser-Dampf-Kreislaufs 26 zugeordnet sind. Diese Heizflächen sind in geeigneter Weise mit dem Dampfeinlaß 58 des Mitteldruckteils 22b der Dampfturbine 22 oder mit dem Dampfeinlaß 60 des Niederdruckteils 22c der Dampfturbine 22 verbunden.

Die Gasturbine 4 der Gasturbinenanlage 2a ist mit einer Schaufelkühlung versehen. Dabei ist den zu kühlenden Schaufeln der Gasturbine 4 Kühlluft L'' zuführbar. Hierzu zweigt von der Frischluftleitung 14 des Luftverdichters 6 eine für verdichtete Luft L' vorgesehene Luftleitung 76 ab, die in einen Verdampfer 78 mündet. Der Verdampfer 78 ist ausgangsseitig über eine Kühlluftleitung 80 an die Gasturbine 4 angeschlossen.

Sekundärseitig ist der Verdampfer 78 an den Wasser-Dampf-Kreislauf 26 der Dampfturbinenanlage 2b angeschlossen. Hierzu ist der Verdampfer 78 eingangsseitig über eine Zufuhrleitung 82 an den Speisewasserbehälter 72 angeschlossen. Ausgangsseitig ist dem Verdampfer 78 ein Dampfsammelraum 84 nachgeschaltet, der über eine Anzahl von Zuleitungsrohren 86 mit der Wasser-Dampf-Trommel 38 verbunden ist.

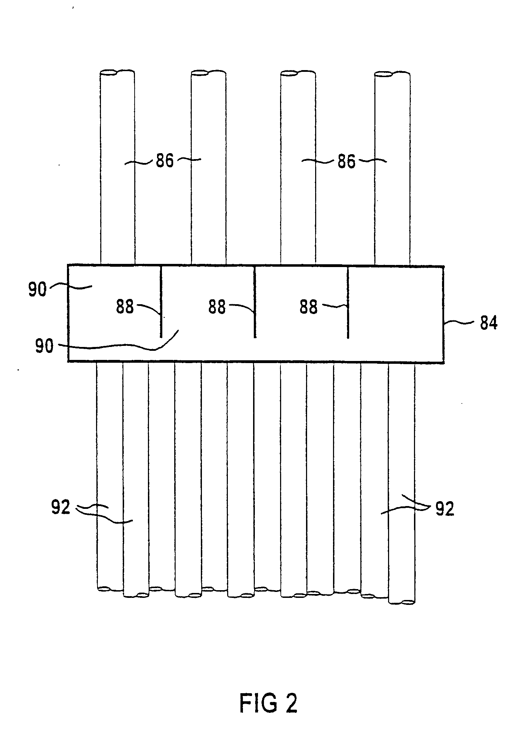

Der im Detail in Figur 2 dargestellte Dampfsammelraum 84 ist durch Schottbleche 88 in eine Anzahl von miteinander verbundenen Unterräumen 90 aufgeteilt. Der Dampfsammelraum 84 ist eingangsseitig an eine Anzahl von Verdampferrohren 92 des Verdampfers 78 angeschlossen. Ausgangsseitig ist der Dampfsammelraum 84 an eine Anzahl von Zuleitungsrohren 86 angeschlossen. Dabei ist jedem der Unterräume 90 des Dampfsammelraums 84 jeweils ein Zuleitungsrohr 86 zugeordnet.

Die zur Schaufelkühlung der Gasturbine 4 erforderliche Luft L wird über die Ansaugluftleitung 8 dem Luftverdichter 6 zugeführt und ist ausgangsseitig nach dem Luftverdichter 6 der Frischluftleitung 14 entnehmbar. Die verdichtete Luft L' weist jedoch eine für die Schaufelkühlung zu hohe Temperatur auf. Deswegen ist eine Abkühlung der verdichteten Luft L' erforderlich. Diese erfolgt in dem Verdampfer 78. Die abgekühlte Luft L'' ist über die Luftleitung 80 der Gasturbine 4 zur Schaufelkühlung zuführbar.

Die bei der Luftkühlung entstandene Wärme ist dem Wasser-Dampf-Kreislauf 26 der Dampfturbinenanlage 2b zuführbar. Hierfür wird Speisewasser aus dem Speisewasserbehälter 72 über eine Wasserleitung 82 dem Verdampfer 78 zugeleitet. Dieses Speisewasser erfährt durch die Abkühlung der verdichteten Luft L' im Verdampfer 78 eine teilweise Verdampfung. Das dabei im Verdampfer 78 entstehende Wasser-Dampf-Gemisch wird über eine Anzahl von Zuleitungsrohren 86 der Wasser-Dampf-Trommel 38 zugeführt. Damit bei dem Transport von dem Verdampfer 78 in die Wasser-Dampf-Trommel 38 des Wasser-Dampf-Gemisches keine Trennung des Zwei-Phasen-Gemisches auftritt, weisen die Zuleitungsrohre 86 einen Rohrinnendurchmesser dᵢ auf, der gewährleistet, daß die Strömungsgeschwindigkeit des Zwei-Phasen-Gemischs 35 m/s nicht unterschreitet. Außerdem ist zwischen die Zuleitungsrohre 86 und den Verdampfer 78 der Dampfsammelraum 84 geschaltet. Dieser ist durch Schottbleche in eine Anzahl von miteinander verbundenen Unterräumen 90 aufgeteilt, die alle annähernd denselben Dampfdruck aufweisen. Diese sind jeweils einem Zuleitungsrohr 86 zugeordnet. Dadurch ist eine besonders gleichmäßige Beaufschlagung der Zuleitungsrohre 86 mit dem Wasser-Dampf-Gemisch gewährleistet.

Durch die Zwischenschaltung des Dampfsammelraums 86 zwischen die Zuleitungsrohre 84 und den Verdampfer 78 ist mit besonders geringem technischen Aufwand gewährleistet, daß beim Transport des Wasser-Dampf-Gemisches vom Verdampfer 78 zur Wasser-Dampf-Trommel 38 keine Separation des Zwei-Phasen-Gemisches auftritt. Somit weist die Gas- und Dampfturbinenanlage 2 eine besonders hohe Lebensdauer auf, da Beschädigungen der einzelnen Komponenten besonders sicher vermieden sind. Zudem ist in besonders günstiger Weise eine Nutzung der in der Anlage entstehenden Abwärme gewährleistet.

## Patentansprüche

1. Gas- und Dampfturbinenanlage (2) mit einem einer Gasturbine (4) rauchgasseitig nachgeschalteten Abhitzedampferzeuger (30), dessen Heizflächen in den Wasser-Dampf-Kreislauf (26) einer Dampfturbine (22) geschaltet sind, wobei der Gasturbine (4) zur Schaufelkühlung zuzuführende Kühlluft (L'') als Heizmedium über einen Verdampfer (78) geführt ist, der sekundärseitig an den Wasser-Dampf-Kreislauf (26) angeschlossen ist und dabei ausgangsseitig in einen Dampfsammelraum (84) mündet,
**dadurch gekennzeichnet, daß** der Dampfsammelraum (84) über eine Anzahl von dampfseitig parallel geschalteten Zuleitungsrohren (86) mit einer Wasser-Dampf-Trommel (38) verbunden ist, wobei der Dampfsammelraum (84) eine Anzahl von miteinander verbundenen Unterräumen (90) aufweist, die durch die Anordnung einer Anzahl von Schottblechen (88) gebildet sind und von denen jeder jeweils einem Zuleitungsrohr (86) zugeordnet ist.

2. Gas- und Dampfturbinenanlage (2) nach Anspruch 1,
**dadurch gekennzeichnet, daß** die Zuleitungsrohre (86) hinsichtlich ihrer Anzahl und ihres Innendurchmessers dᵢ derart ausgelegt sind, daß bei allen Betriebszuständen der Gas- und Dampfturbinenanlage (2) das in ihnen strömende Wasser-Dampf-Gemisch eine Strömungsgeschwindigkeit von 35 m/s nicht unterschreitet.

3. Gas- und Dampfturbinenanlage (2) nach Anspruch 1 oder 2, **dadurch gekennzeichnet, daß** die Wasser-Dampf-Trommel (38) zur Bildung eines Wasser-Dampf-Umlaufs (42) mit einer im Abhitzedampferzeuger (30) angeordneten Verdampferheizfläche (40) verbunden ist.

## Claims

1. Gas- and steam-turbine plant (2) having a heat-recovery steam generator (30) which is connected downstream of a gas turbine (4) on the flue-gas side and the heating surfaces of which are connected in the water/steam circuit (26) of a steam turbine (22), cooping air (L'') to be fed for cooling the blades being directed as heating medium via an evaporator (78) to the gas turbine (4), which evaporator (78) is connected on the secondary side to the water/steam circuit (26) and in the process opens on the outlet side into a steam-collecting chamber (84),
**characterized in that** the steam-collecting chamber(84) is connected to a water/steam drum (38) via a number of feed pipes (86) connected in parallel on the steam side, the steam-collecting chamber (84) having a number of sub-chambers (90), which are connected to one another and are formed by the arrangement of a number of bulkhead plates (88) and of which each is in each case assigned to a feed pipe (86).

2. Gas- and steam-turbine plant (2) according to Claim 1, **characterized in that** the feed pipes (86) are designed with regard to their number and their inside diameter dᵢ in such a way that, under all operating states of the gas- and steam-turbine plant (2), the water/steam mixture flowing in them does not fall below a flow velocity of 35 m/s.

3. Gas- and steam-turbine plant (2) according to Claim 1 or 2, **characterized in that** the water/steam drum (38), for forming a water/steam circulation (42), is connected to an evaporator heating surface (40) arranged in the heat-recovery steam generator (30).

## Revendications

1. Installation (2) de turbine à gaz et de turbine à vapeur, comprenant un générateur (30) de vapeur à récupération de la chaleur perdue monté en aval du côté des gaz d'échappement de la turbine (4) à gaz et dont des surfaces de chauffe sont montées dans le circuit (26) eau-vapeur d'une turbine (22) vapeur, de l'air (L") de refroidissement, envoyé pour le refroidissement des cubes à la turbine (4) à gaz, passant en tant que fluide de chauffage dans un évaporateur (78), qui est relié du côté secondaire au circuit (26) eau-vapeur et qui débouche du côté de la sortie dans une chambre (84) collectrice de vapeur,
**caractérisée en ce que** la chambre (84) collectrice de vapeur communique par un certain nombre de conduits (86) d'entrée montés en parallèle du côté de la vapeur avec un ballon (38) eau-vapeur, la chambre (84) collectrice de vapeur ayant un certain nombre de sous-chambres (90) communiquant entre elles, qui sont formées par l'agencement d'un certain nombre de tôles (88) de partition et à chacune desquelles est associé respectivement un conduit (86) d'entrée.

2. Installation (2) de turbine à gaz et de turbine à vapeur suivant la revendication 1,
**caractérisée en ce que** les conduits (86) d'entrée sont conçus du point de vue de leur nombre et de leur diamètre dᵢ intérieur de façon à ce que, pour tous les états de fonctionnement de l'installation (2) de turbine à gaz et de turbine à vapeur, la vitesse d'écoulement d'un mélange d'eau-vapeur y passant ne soit pas inférieure à 30 m/s.

3. Installation (2) de turbine à gaz et de turbine à vapeur suivant la revendication 1 ou 2,
**caractérisée en ce que** le ballon (38) eau-vapeur communique, pour la formation d'une recirculation (42) eau-vapeur, avec une surface (40) de chauffe d'évaporateur placée dans le générateur (30) de vapeur à récupération de la chaleur perdue.
